# EUROPÄISCHE PATENTSCHRIFT

(11) **EP 0 375 084 B1**
(45) Veröffentlichungstag und Bekanntmachung des Hinweises auf die Patenterteilung: **21.07.1993**
(21) Anmeldenummer: 89250098.4
(22) Anmeldetag: 29.11.1989
(51) Int. Cl.: F16H 3/54, F16H 37/04

(54) **Mechanisch schaltbares Dreigang-Planetengetriebe**
Mechanically shiftable three-speed planetary gearing
Boîte de vitesses à trains épicycloidaux avec un changement mécanique de ses trois rapports

(30) Priorität: 23.12.1988 DE 3844166
(43) Veröffentlichungstag der Anmeldung: 27.06.1990
(73) Patentinhaber: MANNESMANN Aktiengesellschaft, 40027 Düsseldorf (DE)
(72) Erfinder: Erlbruch, Peter, D-5804 Herdecke (DE)
(74) Vertreter: Meissner, Peter E., Dipl.-Ing.

(56) Entgegenhaltungen:
- DE-C- 205 522
- GB-A- 1 156 264

## Beschreibung

Die Erfindung betrifft ein mechanisch schaltbares Dreigang-Planetengetriebe gemäß Oberbegriff des Ansprüches 1.

Aus DE-A- 2251 299 ist ein zweistufiges Planetengetriebe mit Untersetzungsgetriebe bekannt, bei dem eine innen- und außenverzahnte Kupplungshülse verschieblich ausgeführt ist. In der Schaltstufe mit direktem Durchgriff bleiben bei dem aus dieser Schrift bekannte Getriebe die Untersetzungsglieder im Eingriff. Sie laufen in dieser Schaltstufe leer mit.

Hinzu tritt, daß der Drehzahl der Antriebswelle durch die kinematischen Verhältnisse des Untersetzungsgetriebes Grenzen gesetzt sind.

Das bekannt Getriebe weist im Antrieb eine Untersetzungsstufe mittels Stirnrad auf. Der Abtrieb ist dabei achsparallel zum Antrieb versetzt angeordnet. Insgesamt ist dadurch das Getriebe großvolumig gestaltet.

Aufgabe der Erfindung ist es, ein kompaktes Getriebe zu schaffen, das mit einfachen Mitteln exakt schaltbar ist und bei der direkten Schaltstufe eine Belastung der Untersetzungsglieder durch hohe Fliehkräfte vermeidet.

Nach der erfindungsgemäßen Lösung entsprechend den im Anspruch 1 aufgeführten Merkmalen wird bei dem mechanisch schaltbaren Dreigang-Planetengetriebe die Abtriebswelle auf der gleichen Achse wie die Antriebswelle angeordnet, an der Antriebswelle ist eine Außenverzahnung vorgesehen, mit der die Schaltmuffe axial verschiebbar in Eingriff steht. Die Antriebswelle ist durch eine Schalteinrichtung axial verschiebbar, an dem Planetenträger sind Stufenplanetenräder unterschiedlichen Durchmessers vorgesehen, wobei die der Schaltmuffe abgewandten Planetenräder einen kleineren Durchmesser aufweisen, die Planetenräder stützen sich auf einen Zahninnenkranz ab und die Planetenträger kämmen mit einem Sonnenradring, der eine Innenverzahnung aufweist, in die die Verzahnung des Zentralrades in Eingriff bringbar ist.

Das Dreigangplanetengetriebe weist ein geschlossenes, dem Bewegungsraum der Getriebeelemente angepaßtes Gehäuse auf, bei dem an beiden Enden die auf gleicher Achse angeordneten Welle für An- und Abtrieb herausragen. Erfindungsgemäß ist die auf der Abtriebswelle verschiebliche Schaltmuffe und die Antriebswelle axial bewegbar. Beim direkten Gang sind die Antriebs- und die Abtriebswelle direkt kuppelbar. In dieser Schaltstufe ist die Untersetzung des Planetengetriebes außer Eingriff. Eine Begrenzung der Eingangsdrehzahl der Antriebswelle entfällt. Eine solche Begrenzung ist bei in der direkten Schaltstufe mitlaufenden Untersetzungselementen erforderlich, da bei höherer Drehzahl der Antriebswelle insbesondere die Lagerungen der Planetenräder höheren Fliehkräften ausgesetzt sind, die zu hohem Verschleiß bis hin zur Zerstörung der Lagerelemente führen können.

Durch die Möglichkeit des außer Eingriffs nehmens der Planetengetriebestufe beim direkten Gang ist diese Stufe belastungsgerecht auslegbar. Im besonderen Maße trifft dies für die Lagerung der Planetenräder zu, und zwar bezüglich kraftmäßiger, drehzahlmäßiger und eingriffszeitmäßiger Belastung. Darüber hinaus tritt durch die Ruhestellung eine Verschleißminderung bei den Laufflächen der Verzahnung sowie eine Verringerung der Leerlaufverluste auf.

Während beim direkten Gang die Schaltmuffe und der Planetenträger außer Eingriff stehen, ist bei den übrigen Schaltstufen die Schaltmuffe mit dem Planetenträger formschlüssig verbunden. Für dieses Schalten ist ein Schaltzylinder mit eindeutig ansteuerbaren und wiederholbaren Schaltstellungen vorgesehen. Die Steuerung dieses Schaltzylinders ist logisch verknüpft mit der der übrigen Schaltstufen. Der Schaltzylinder für die Schaltstufe der Untersetzungen ist körperlich mit dem auf die Schaltmuffen wirkenden Schaltzylinder verbunden. Er setzt steuerungs- und verstellmäßig bei der exakt eingefahrenen Stelle auf, bei der der Planetensteg und die Schaltmuffe fest im Eingriff sind.
Die verschiedenen Stufen des Untersetzungsgetriebes werden bei konstanter Größe des Zentralrades durch einen Sonnenradring erreicht, bei der eine dem Zentralrad entsprechende Innenverzahnung und eine mit dem kleineren Planetenrad kämmende Außenverzahnung aufweist.

Das erfindungsgemäße Dreigang-Planetengetriebe zeichnet sich durch eine hohe raumkonzentrierte koaxiale Bauform aus. Durch verschiedene Übersetzungskombinationen in der Planetenabtriebsstufe sind hohe Gesamtübersetzungen realisierbar.

Eine Ausführungsform des Getriebes ist in den folgenden Figuren aufgezeigt. Es zeigt:
- Fig. 1: ein Schema der direkten Übersetzung,
- Fig. 2: ein Schema der hohen Übersetzung und
- Fig. 3: ein Schema der mittleren Übersetzung.

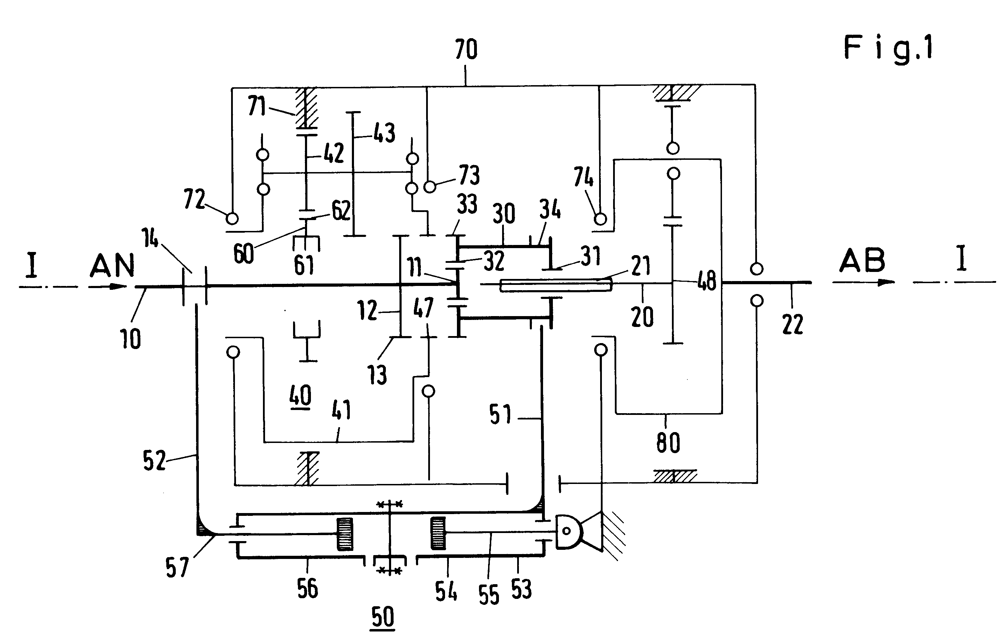

Die Positionsbezeichnungen sind bei allen drei Figuren identisch. So ist bei den Figuren 1 bis 3 die Antriebswelle 10 und die Abtriebswelle 20 auf der gleichen Achse 1 angeordnet. Auf der Antriebswelle 10 ist eine Umfangsnut 14 vorgesehen, in die das Schaltgabelgestänge 52 greift. Am Kopf der Antriebswelle 10 ist die Kupplungsverzahnung 11 11 angeordnet. Zwischen der Kupplungsverzahnung 11 und der Umfangsnut 14 ist ein eine Verzahnung 13 aufweisendes Zentralrad 12 angeordnet.

Die Abtriebswelle 20 weist eine Außenverzahnung 21 auf. Die Außenverzahnung 21 ist formschlüssig mit einer Innenverzahnung 31 einer Schaltmuffe 30 verbunden. An dem dem Antrieb zugewandten Ende der Schaltmuffe 30 ist eine Innenverzahnung 32 und eine Außenverzahnung 33 vorgesehen. Die Schaltmuffe 30 weist außerdem eine Umfangsnut 34 auf, in die das Schaltgabelgestänge 51 greift.

Das Planetengetriebe 40 ist umgeben vom Gehäuse 70, das antriebsseitig einen Lagerungssteg 72 und abtriebsseitig einen Lagerungssteg 73 aufweist, in den der Planetenträger 41 gelagert ist. Der Planetenträger 41 weist Planetenräder 42 und 43 auf, wobei die Planetenräder 42 den kleineren Durchmesser besitzen. Mit den Planetenrädern 42 in Eingriff bringbar ist ein Sonnenradring 60, der eine Innenverzahnung 61 und eine Außenverzahnung 62 besitzt.

Die Planetenräder 42 kämmen mit einem Zahnkranz 71, der im Gehäuse 70 vorgesehen ist.

Der Planetenträger 41 weist auf dem dem Abtrieb zugewandten Ende eine Innenverzahnung 47 auf, die mit der Außenverzahnung 33 der Schaltmuffe 30 in Eingriff bringbar ist. Die Antriebswelle 10 und die Schaltmuffe 30 sind durch eine Schalteinrichtung 50 verschiebbar. Die Schalteinrichtung 50 besteht dabei aus einer Verschiebeeinrichtung 53, die aus den Kolben-Zylinder-Einheiten 54, 55 und 56, 57 gebildet wird. Die Kolbenstange 55 ist dabei am Gehäuse 70 schwenkbar gelagert. Am Zylinder 54 ist das Schaltgabelgestänge 51 vorgesehen, das die Schaltmuffe 30 schaltet. An der Kolbenstange 57 ist das Schaltgabelgestänge 52 vorgesehen, das die Antriebswelle Schaltet. An der Abtriebswelle 20 kann ein weiteres Untersetzungsgetriebe 80 vorgesehen werden, das die Ausgangswelle 22 aufweist. Das Untersetzungsgetriebe 80 kann dabei im Gehäuse 70 untergebracht werden. Im Gehäuse 70 ist eine Lagerung 74 für den Abtrieb vorgesehen.

In der Figur 1 ist die direkte Übersetzung dargestellt. Die Verschiebeeinrichtung 53 ist kolbenseitig dabei drucklos. Bei der direkten Übersetzung wird der Kraftfluß über die Kupplungsverzahnung 11 der Antriebswelle 10 und nachfolgend über die Innenverzahnung 32 auf die Schaltmuffe 30 und dann über die Innenverzahnung 31 und die Außenverzahnung 21 auf die Abtriebswelle 20 geleitet.

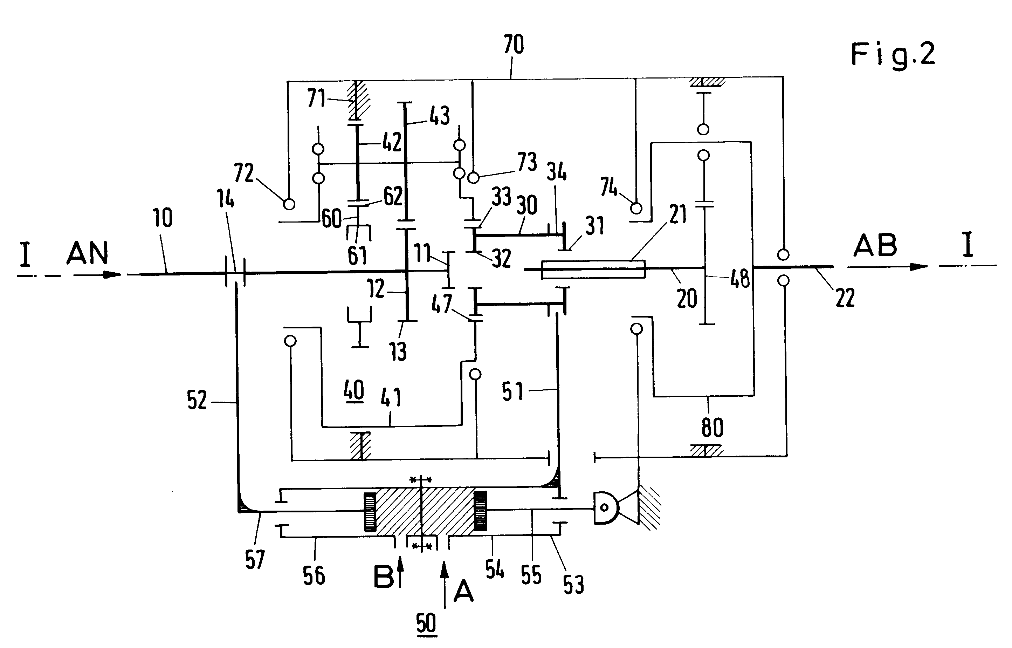

Die Figur 2 zeigt die hohe Übersetzung. In der Schaltstufe A bewegt sich der Zylinder 54 in Richtung Antrieb und nimmt dabei das Schaltgabelgestänge 51 in gleicher Richtung mit. Das Schaltgabelgestänge 52 verschiebt die Schaltmuffe 30 und bringt die Außenverzahnung 33 in Eingriff mit der Innenverzahnung 47 des Planetenträgers 41. Gleichzeitig wird die Kolben-Zylinder-Einheit 56, 57 mit Druck beaufschlagt in der Schaltstufe B. Die Kolbenstange 57 bewegt dabei das Schaltgabelgestänge 52 und wirkt über die Umfangsnut 14 auf die Antriebswelle 10. Das auf der Antriebswelle 10 angeordnete Zentralrad 12 wird dabei soweit bewegt, daß seine Verzahnung 13 mit der Verzahnung des großen Planetenrades 43 in Eingriff gelangt.

Der Kraftfluß wird bei der hohen Übersetzung über die Antriebswelle 10, das Zentralrad 12, das große Planetenrad 43, den Planetenträger 41 und über die Innenverzahnung 47 auf die Außenverzahnung 33 der Muffe 30 und von hier über die Innenverzahnung 31 und über die Außenverzahnung 21 auf die Abtriebswelle 20 geleitet. Das kleine Planetenrad 42 kämmt dabei mit dem im Gehäuse 70 angeordneten Zahnkranz 71.

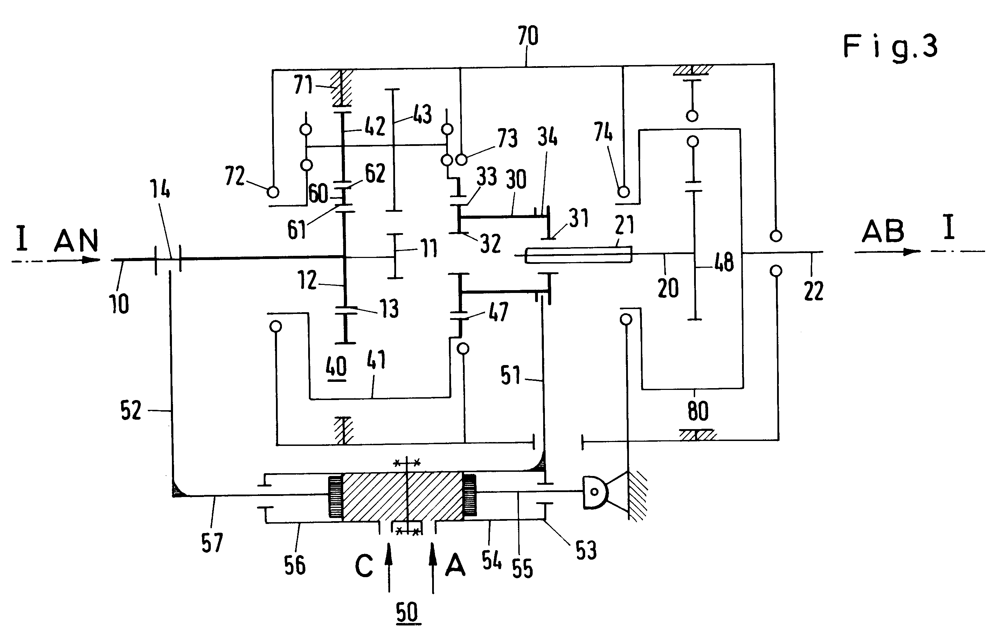

Die Figur 3 zeigt die mittlere Übersetzung. Die Schaltmuffe 30 bleibt dabei geschaltet wie in Figur 2 bei der hohen Übersetzung dargestellt mit der Schaltstufe A. Die Kolben-Zylinder-Einheit 56, 57 wird in der Schaltstufe C geschaltet. Hierbei wird die Antriebswelle 10 derart bewegt, daß das Zentralrad 12 über seine Außenverzahnung 13 mit der Innenverzahnung 61 des Sonnenradringes 60 in Eingriff kommt und von dort über die Außenverzahnung 62 mit dem kleinen Planetenrad 42 kämmt. In der Schaltstellung A, C wird der Kraftfluß über die Antriebswelle 10, das Zentralrad 12, den Sonnenradring 60, die Planetenräder 42, den Planetenträger 41 und über die Innenverzahnung 47 auf die Außenverzahnung 33 der Schaltmuffe und von dieser über die Innenverzahnung 31 auf die Außenverzahnung 21 der Abtriebswelle 20 geleitet.

In den Figuren nicht dargestellt ist die Ausführungsform, bei der statt der Schaltstufen B und C der Kolben-Zylinder-Einheit 56, 57, für jede Kolben-Zylinder-Einheit 54, 55 und 56, 57 jeweils nur eine Schaltstufe gewählt wird und die für die Antriebswelle 10 erforderliche Zweistufigkeit durch Schaltgabelgestänge bewirkt wird, die an der der Achse I abgewandten Ende drehbar gelagert sind und unterschiedliche Hebelarmverhältnisse aufweisen.

## Patentansprüche

1. Mechanisch schaltbares Planetengetriebe mit einem an einer Antriebswelle (10) angeordneten inneren Zentralrad (12) sowie einer am Kopf der Antriebswelle vorgesehenen Außenverzahnung (11) als Eingangsglieder, und mit einer eine Innen- und Außenverzahnung aufweisenden Schaltmuffe (30) als Ausgangsglied eines ersten Planetengetriebes, die axial zur Abtrieb-swelle über ein aus einem Gehäuse herausragendes Schaltgabelgestänge (51) verschiebbar ist, wobei die Schaltmuffe über die Außenverzahnung (33) mit einem Planetenräder (43) aufweisenden Planetenträger (41) und die Innenverzahnung (32) mit der Eingangswelle formschlüssig verbindbar ist, gekennzeichnet durch folgende Merkmale:
a) die Abtriebswelle (20) ist auf der gleichen Achse (I) wie die Antriebswelle (10) angeordnet,
b) an der Abtriebswelle (20) ist eine Außenverzahnung (21) vorgesehen, mit der die Schaltmuffe (30) axial verschiebbar in Eingriff steht,
c) die Antriebswelle (10) ist durch eine Schalteinrichtung (50) axial verschiebbar,
d) an dem Planetenträger (41) sind weitere Planetenräder (42) mit unterschiedlichen Durchmesser vorgesehen.
e) die weiteren Planetenräder (42) stützen sich auf einen Zahninnenkranz (71) ab,
f) die weiteren Planetenräder (42) kämmen mit einem Sonnenradring (60), der eine Innenverzahnung (61) aufweist, in die die Verzahnung des Zentralrades (12) in Eingriff bringbar ist zum Schalten
eines dritten Ganges.

2. Planetengetriebe nach Anspruch 1,
dadurch gekennzeichnet,
daß die Schaltmuffe (30) und die Antriebswelle (10) über Schaltgabelgestänge (51, 52) durch eine gemeinsame Verschiebeeinrichtung (53) schaltbar sind.

3. Planetengetriebe nach Anspruch 2,
dadurch gekennzeichnet,
daß die Verschiebeeinrichtung (53) ein mehrstufiger Verstellzylinder ist.

4. Planetengetriebe nach Anspruch 2,
dadurch gekennzeichnet,
daß die Verschiebeeinrichtung (53) aus zwei miteinander verbundenen Hydraulikzylindern (54, 56) besteht.

5. Planetengetriebe nach Anspruch 1,
dadurch gekennzeichnet,
daß die Kolbenstange (55) des Zylinders der Schaltstufe A (54) als Abstützung ausgeführt ist.

6. Planetengetriebe nach Anspruch 5,
dadurch gekennzeichnet,
daß am Zylinder (54) das Schaltgabelgestänge (51) angeordnet ist, das mit der Schaltmuffe (30) in Verbindung steht.

7. Planetengetriebe nach Anspruch 4,
dadurch gekennzeichnet,
daß die Zylinder (54, 56) jeweils bodenseitig verbunden sind und die Kolbenstange (57) des Zylinders (56) mit dem Schaltgabelgestänge (52) des Antriebs in Verbindung steht.

8. Planetengetriebe nach Anspruch 7,
dadurch gekennzeichent,
daß der Zylinder (56) eine Stell-Länge aufweist, die größer ist als der Abstand der Zahnradmitten der Planetenräder (42, 43).

9. Planetengetriebe nach Anspruch 8,
dadurch gekennzeichnet,
daß der Zylinder (56) in mindestens zwei Schaltstufen verfahrbar ist.

10. Planetengetriebe nach Anspruch 5,
dadurch gekennzeichnet,
daß die Kolbenstange (55) des Zylinders (54) eine Länge aufweist, die bei vollem Kolbenhub mindestens dem Stellweg der Schaltmuffe (30) entspricht.

11. Planetengetriebe nach Anspruch 2,
dadurch gekennzeichnet,
daß die Schaltgabelgestänge (51, 52) an dem der Achse (I) abgewandten Ende drehbar gelagert sind.

12. Planetengetriebe nach Anspruch 11,
dadurch gekennzeichnet,
daß die Schaltgabelgestänge (51, 52) unterschiedliche Hebelarmverhältnisse aufweisen.

13. Planetengetriebe nach einem der genannten Ansprüche,
dadurch gekennzeichnet,
daß die Abtriebswelle (20) mit einem nachgeschalteten Untersetzungsgetriebe (80) verbunden ist, das eine Ausgangswelle (22) aufweist.

14. Planetengetriebe nach Anspruch 13,
dadurch gekennzeichnet,
daß das Untersetzungsgetriebe (80) ein im Gehäuse (70) angeordnetes Planetengetriebe ist.

## Claims

1. A mechanically actuated planetary gear with an inner central wheel (12) located on a drive shaft (10) and as input members external teeth (11) provided at the head of the drive shaft, and with a gear-shift sleeve (30), having internal and external teeth, as output member of a first planetary gear, which sleeve is axially displaceable relative to the driving shaft by means of a shifting linkage (51) which projects out of a housing, the gear-shift sleeve being able to be connected positively by means of the external teeth (33) to a pinion cage (41) bearing planet wheels (43) and the internal teeth (32) being able to be connected positively with the primary shaft, characterised by the following features:
a) the driving shaft (20) is located on the same axis (I) as the drive shaft (10),
b) external teeth (21) are provided on the driving shaft (20), with which teeth the gear-shift sleeve (30) is engaged so as to be axially displaceable,
c) the drive shaft (10) can be displaced axially by means of a switching means (50),
d) additional planet wheels (42) having a different diameter are provided on the pinion cage (41),
e) the additional planet wheels (42) are supported on an inner gear rim (71),
f) the additional planet wheels (42) mesh with a sun wheel ring (60) which has internal teeth (61) in which the teeth of the central wheel (12) can be engaged for actuating a third gear.

2. A planetary gear according to Claim 1, characterised in that the gear-shift sleeve (30) and the drive shaft (10) can be switched via shifting linkages (51, 52) by means of a common displacement means (53).

3. A planetary gear according to Claim 2, characterised in that the displacement means (53) is a multi-stage adjusting cylinder.

4. A planetary gear according to Claim 2, characterised in that the displacement means (53) consists of two hydraulic cylinders (54, 56) connected together.

5. A planetary gear according to Claim 1, characterised in that the piston rod (55) of the cylinder of switching stage A (54) is designed as a support.

6. A planetary gear according to Claim 5, characterised in that the shifting linkage (51) which is connected to the gear-shift sleeve (30) is located on the cylinder (54).

7. A planetary gear according to Claim 4, characterised in that the cylinders (54, 56) are each connected at the base and the piston rod (57) of the cylinder (56) is connected to the shifting linkage (52) of the drive.

8. A planetary gear according to Claim 7, characterised in that the cylinder (56) has a positioning length which is greater than the distance between the centres of the gear wheels of the planet wheels (42, 43).

9. A planetary gear according to Claim 8, characterised in that the cylinder (56) can be moved in at least two switching stages.

10. A planetary gear according to Claim 5, characterised in that the piston rod (55) of the cylinder (54) has a length which for a full stroke of the piston at least corresponds to the regulating distance of the gear-shift sleeve (30).

11. A planetary gear according to Claim 2, characterised in that the shifting linkages (51, 52) are mounted to rotate on the end remote from the axis (I).

12. A planetary gear according to Claim 11, characterised in that the shifting linkages (51, 52) have different lever arm ratios.

13. A planetary gear according to one of the aforementioned claims, characterised in that the driving shaft (20) is connected to a succeeding reducing gear (80) which has an output shaft (22).

14. A planetary gear according to Claim 13, characterised in that the reducing gear (80) is a planetary gear located in the housing (70).

## Revendications

1. Engrenage planétaire mécaniquement embrayable, comportant une roue centrale interne (12) agencée sur un arbre moteur (10), ainsi qu'une denture externe (11), prévue en tête de l'arbre moteur, en tant qu'organes d'entrée, et un manchon (30) présentant une denture interne et une denture externe, en tant qu'organe de sortie d'un premier engrenage planétaire, qui est déplaçable, axialement à l'arbre mené, par l'intermédiaire d'une tringlerie à fourche d'embrayage (51) faisant saillie d'un carter, ledit manchon pouvant être relié mécaniquement à l'arbre moteur par l'intermédiaire de la denture interne (32) et à une cage de transmission planétaire (41) présentant des roues planétaires (43) par l'intermédiaire de la denture externe (33),
caractérisé par les particularités suivantes :
a) l'arbre mené (20) est agencé sur le même axe (I) que l'arbre moteur (10),
b) sur l'arbre mené (20), est prévue une denture externe (21), avec laquelle le manchon (30) est en engagement de façon axialement déplaçable,
c) l'arbre moteur (10) est axialement déplaçable par un dispositif d'embrayage (50),
d) sur la cage de transmission planétaire (41), sont prévues d'autres roues planétaires (42) de diamètre différent,
e) les autres roues planétaires (42) s'appuient sur une couronne interne dentée (71),
f) les autres roues planétaires (42) engrènent avec une bague de roue solaire (60) qui présente une denture interne (61), dans laquelle peut être engagée la denture de la roue centrale (12), pour embrayer un troisième rapport.

2. Engrenage planétaire selon la revendication 1,
caractérisé en ce que le manchon (30) et l'arbre moteur (10) peuvent être embrayés par un dispositif de déplacement commun (53), par l'intermédiaire de la tringlerie à fourche d'embrayage (51,52).

3. Engrenage planétaire selon la revendication 2,
caractérisé en ce que le dispositif de déplacement (53) est un vérin à plusieurs étages.

4. Engrenage planétaire selon la revendication 2,
caractérisé en ce que le dispositif de déplacement (53) est constitué de deux vérins hydrauliques (54,56) reliés l'un à l'autre.

5. Engrenage planétaire selon la revendication 1,
caractérisé en ce que la tige de piston (55) du vérin de l'étage A (54) est réalisée en tant qu'appui.

6. Engrenage planétaire selon la revendication 5,
caractérisé en ce que, sur le vérin (54), est agencée la tringlerie à fourche d'embrayage (51) qui est reliée au manchon (30).

7. Engrenage planétaire selon la revendication 4,
caractérisé en ce que les vérins (54,56) sont reliés, à chaque fois, du côté du fond, et la tige de piston (57) du vérin (56) est reliée à la tringlerie à fourche d'embrayage (52) de l'entraînement.

8. Engrenage planétaire selon la revendication 7,
caractérisé en ce que le vérin (56) présente une longueur de réglage qui est plus grande que l'écartement des centres des roues planétaires (42,43).

9. Engrenage planétaire selon la revendication 8,
caractérisé en ce que le vérin (56) est déplaçable dans au moins deux étages de commutation.

10. Engrenage planétaire selon la revendication 5,
caractérisé en ce que la tige de piston (55) du vérin (54) présente une longueur qui correspond, pour une course complète du piston, au moins à la course de réglage du manchon (30).

11. Engrenage planétaire selon la revendication 2,
caractérisé en ce que les tringleries à fourche d'embrayage (51,52) sont montées rotatives à l'extrémité opposée à l'axe (I).

12. Engrenage planétaire selon la revendication 11,
caractérisé en ce que les tringleries à fourche d'embrayage (51,52) présentent des rapports de bras de levier différents.

13. Engrenage planétaire selon une des revendications citées,
caractérisé en ce que l'arbre mené (20) est relié à un démultiplicateur (80) disposé en aval, qui présente un arbre de sortie (22).

14. Engrenage planétaire selon la revendication 13,
caractérisé en ce que le démultiplicateur (80) est un engrenage planétaire agencé dans le carter (70).
